# EUROPEAN PATENT APPLICATION

(11) **EP 0 867 355 A1**
(43) Date of publication of application: **30.09.1998**
(21) Application number: 97830598.5
(22) Date of filing: 14.11.1997
(51) Int. Cl.: B62D 1/10

(54) **Steering Wheel for Motor Vehicles**

(30) Priority: 28.03.1997 IT TO970261
(71) Applicant: GESTIND-M.B." MANIFATTURA DI BRUZOLO" S.P.A, I-10050 Bruzolo (Torino) (IT)
(72) Inventor: De Filippo, Emilio, 10050 Bruzolo (Torino) (IT)
(74) Representative: Buzzi, Franco

(57) **Abstract**

A steering wheel for motor-vehicles having a tubular hub (5) to be connected to a steering shaft (10) provided with a threaded end (12) engaged by an axial retaining nut (13). To operate locking and unlocking of the nut (13) a worm gear device (15) is provided, whose helical gear (18) is integrally formed at the outside of the nut (13) and whose worm screw (19) is arranged transversally of the nut (13) and can be driven in rotation laterally of the steering wheel.

## Description

The present invention is related to steering wheels for motor-vehicles, of the type having a framework comprising an outer ring and an inner plate rigidly joined to the ring and centrally carrying a tubular hub for connection to a steering shaft.

A steering wheel of the above-referenced type is disclosed and illustrated, for instance, in European patent application n. 96830565.6 in the name of the same Applicant, unpublished at the priority date of the present application.

Traditionally the connection between the steering wheel hub and the steering shaft is performed by an axial retaining nut engaged onto a threaded end of the steering shaft. Locking and unlocking of the retaining nut, upon assembling of the steering wheel on the vehicle or, respectively, in case the steering wheel is to be removed from the vehicle, is usually carried out by operating unscrewing of the nut by means of a conventional tool. Owing to the narrow space normally available laterally of the nut, a box wrench is as a rule employed, which is introduced axially into to the steering wheel. This evidently involves that the retaining nut be frontally accessible, i.e. that no obstacles prevent introduction of the box wrench in the axial direction. However this originates serious problems in connection with the present automotive trend to fit safety systems such as airbag devices and related functional components within the steering wheel. Actually, it is not possible to install these safety devices into the steering wheel prior to securing thereof to the vehicle steering shaft, i.e. following locking of the retaining nut. To the aim of reducing the production costs it would instead be desirable to assemble onto the steering shaft the complete steering wheel, i.e. already provided with the related airbag device and any further associated functional components.

The object of the present invention is to provide a simple, safe and functional solution to the above problem, and this object is achieved by the fact that a steering wheel of the type set forth at the beginning is essentially characterized in that it comprises a worm gear device to operate locking and unlocking between said nut and said threaded end of the steering shaft, said worm gear device including a helical gear integrally formed at the outside of the nut and a worm screw arranged transversally of the nut and to be driven in rotation laterally of the steering wheel.

By virtue of this idea of solution any need of axial access to the retaining nut through the steering wheel is avoided, whereby mounting of the steering wheel onto the steering shaft can be to advantage carried out after an airbag device and any further related functional components have already been pre-assembled within the steering wheel itself. Also possible removal of the steering wheel from the steering shaft is thus made extremely simple and easy, without any need to disassemble any of the functional components installed within the steering wheel.

According to a preferred embodiment of the invention said worm gear device comprises a hollow body rigidly secured to the hub and within which the retaining nut is rotatably fitted, coaxially with the hub, said hollow body being formed with a lateral cradle portion for the rotatable support of the worm screw.

Due to this arrangement the worm gear device additionally acts, whenever the steering wheel has to be disassembled from the steering shaft, as an extractor device of the steering wheel itself.

The worm screw has conveniently two enlarged end heads for axial retention thereof relative to the cradle portion, and one of which defines an operating member to be engaged by a suitable tool for rotating the worm screw.

The invention will now be disclosed in detail with reference to the accompanying drawings, purely provided by way of non limiting example, in which:
-Figure 1 is a diagrammatic lateral elevational view of a steering wheel according to the invention,
-Figure 2 is a vertically sectioned and enlarged view of figure 1,
-Figure 3 shows in an enlarged scale a portion of figure 2, and
-Figure 4 is a cross-sectioned view along line IV-IV of figure 3.

Referring to the drawings, a steering wheel according to the invention essentially comprises a metal framework formed by a substantially circular outer ring 1 and by an inner plate 2 rigidly connected to each other by metal rods 3. The plate 2 is arranged in a parallel and rearwardly offset plane relative to the plane of the ring 1 and has centrally an aperture 4 coaxial with the ring 1 and through which an innerly grooved tubular hub 5 is fixed.

The particulars of the connection between the rods 3 and the plate 2 are conveniently as disclosed and illustrated in already cited European patent application n. 96830565.6.

The metal framework defined by the ring 1, the plate 2 and the connecting rods 3 is embodied within a foamed plastic material covering body generally designated as 6, moulded over the framework. The covering body 6 delimits an inner recess 7, closed at the rear by the plate 2 and at the front by a cover 8. The recess 7 is designed to house an airbag device of a conventional type, not shown in the drawings, secured to a support element 9 which is in turn rigidly connected in front of the plate 2.

The tubular hub 5 receives the end of a steering shaft 10, having a grooved axial portion 11 engaged with the inner grooves of the hub 5, and followed by an outerly threaded terminal 12 on which an axial retaining nut 13 is screwed.

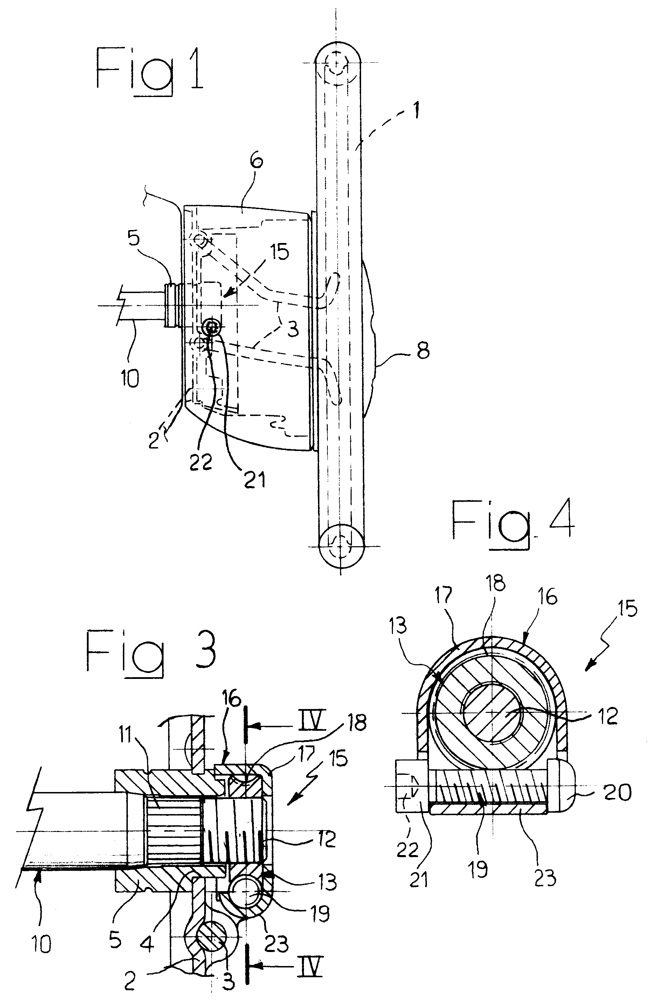

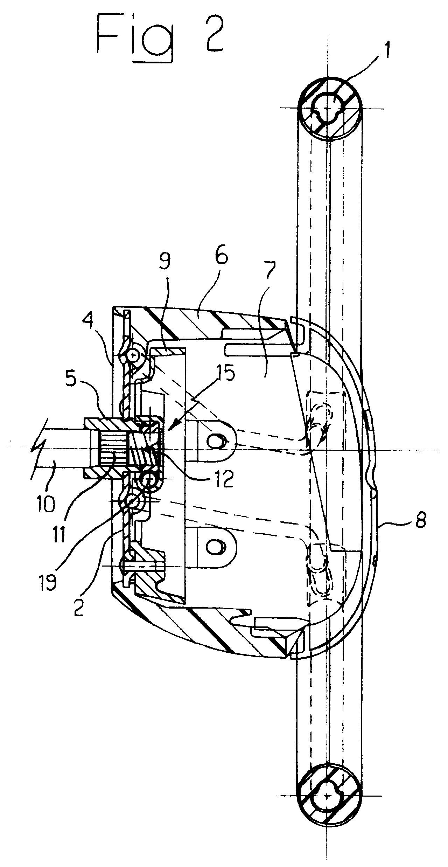

According to the fundamental feature of the invention, the retaining nut 13 is an integral part of a locking and unlocking worm gear device, generally designated as 15 and shown in better detail in figures 3 and 4. The locking and unlocking device 15 comprises a hollow body 16, normally made of metal and rigidly secured to the hub 5 or to the plate 2 by welding, having a substantially emi-circularly shaped portion 17, coaxial to the hub 5, and a lateral cradle-like portion 23 oriented transversally of the hub 5. The nut 13 is rotatably fitted within the emi-circular portion 17, and is integrally and coaxially formed with an outer helical gear 18 meshing with a worm screw 19 in turn rotatably supported by the cradle portion 23. The worm screw 19 has two end enlarged heads 20, 21 for axial retaining thereof relative to the cradle portion 23 and of which the head 21 is accessible laterally, i.e. transversally of the hub 5, from the outside of the covering body 6 of the steering wheel, such as depicted in figure 1. The head 21 is formed with a polygonal seat 22 and constitutes an operating member intended to be engaged by a suitable tool so as to rotate the worm screw 19.

It will thus be evident that while the worm screw 19 is rotated in one or in the opposite direction, a corresponding rotation of the nut 13 is performed in one or in the opposite direction, respectively corresponding to screwing and unscrewing thereof relative to the threaded terminal 12 of the steering shaft 10, and thus to axial locking or unlocking of the hub 5 relative to the steering shaft 10.

Due to the above disclosed arrangement, assembling and disassembling of the steering wheel according to the invention relative to the steering shaft 10 do not require access of any operating tool of the nut 13 in the axial direction through the steering wheel, since as explained locking and unlocking of the nut 13 can be performed laterally from outside by means of the head 21 of the worm gear 19. Accordingly the steering wheel can be secured to the steering shaft 10 in a completely pre-assembled condition, namely following application of the airbag device and of any associated functional components within the recess 7, with evident advantages during production. Likewise, possible unlocking and removal of the steering wheel from the steering shaft 10 do not require disassembling of the elements housed within the recess 7. A further advantage deriving from the arrangement according to the invention consists of the fact that locking between the nut 13 and the threaded terminal 12 of the steering shaft 19 can be performed under a tightening torque appreciably higher than in the case of the traditional arrangements, and is also irreversible, in the sense that unlocking can be performed only if rotation of the worm screw 19 is positively operated. As a consequence the steering wheel according to the invention ensures in use a maximum safety degree as far as coupling thereof with the steering shaft 10 is concerned.

Lastly it is to be pointed out that when the worm gear device 15 is operated so as to unlock the nut 13 relative to the threaded terminal 12, it operates advantageously as an extractor device, thus making easier removal of the steering wheel from the steering shaft 10.

Naturally the details of construction and the embodiments may be widely varied with respect to what has been disclosed and illustrated, without thereby departing from the scope of the present invention, such as defined in the appended claims.

## Claims

1. Steering wheel for motor-vehicles having a framework comprising an outer ring (1), an inner plate (2) rigidly joined to the ring (1) and centrally carrying a tubular hub (5) for connection to a steering shaft (10) having a threaded end (12), and an axial retaining nut (13) between said hub (5) and said threaded end (12) of the steering shaft (10), characterized in that it comprises a worm gear device (15) to operate locking or unlocking between said nut (13) and said threaded end (12) of the steering shaft (10), said worm gear device including a helical gear (18) integrally formed at the outside of the nut (13) and a worm screw (19) arranged transversally of the nut (13) and to be driven in rotation laterally of the steering wheel.

2. Steering wheel according to claim 1, characterized in that said worm gear device (15) comprises a hollow body (16) rigidly fixed to the hub (5) and in which the retaining nut (13) is rotatably fitted, coaxially with the hub (5), said hollow body (16) being formed with a lateral cradle portion (23) for the rotatable support of said worm screw (19).

3. Steering wheel according to claim 2, characterized in that the worm screw (19) has two enlarged end heads (20, 21) for axial retention thereof relative to said cradle portion (23) and one of which defines an operating member (21, 22) to be engaged by a tool for rotating said worm screw (19).
